# EUROPEAN PATENT SPECIFICATION

(11) **EP 3 491 932 B1**
(45) Date of publication and mention of the grant of the patent: **14.10.2020**
(21) Application number: 17752492.3
(22) Date of filing: 24.07.2017
(51) Int. Cl.: A23K 10/20, A23K 10/30, A23K 50/80

(54) **FEED FOR REARING OMNIVOROUS FISH**
FUTTER ZUR AUFZUCHT VON OMNIVOREN FISCHEN
RATIO POUR LA CULTURE DE POISSONS OMNIVORES

(30) Priority: 26.07.2016 PT 2016109547
(43) Date of publication of application: 05.06.2019
(73) Proprietor: Instituto Politécnico De Leiria, 2411-901 Leiria (PT)
(72) Inventor: MAXIMINO ROJÃO SOBREIRO CATARINO, Mafalda, 2690-309 Sta. Iria da Azóia (PT); CORREIA GONÇALVES FERNANDES, Sílvia, 2411-901 Leiria (PT); DE FREITAS FERREIRA, Susana Margarida, 2411-901 Leiria (PT)
(74) Representative: Pereira da Cruz, Joao
(86) International application number: PCT/IB2017/054470
(87) International publication number: WO 2018/020395

(56) References cited:
- KR-B1- 100 822 875
- US-A1- 2015 173 400
- Sing Kong Wah: "POTENTIAL OF CHRYSOMYA MEGACEPHALA (DIPTERA: CALLIPHORIDAE) MAGGOT MEAL AS PROTEIN SOURCE IN TILAPIA (OREOCHROMIS SP.) FEED SING KONG WAH DISSERTATION SUBMITTED IN FULFILLMENT OF THE REQUIREMENT FOR THE DEGREE OF MASTER OF SCIENCE INSTITUTE OF BIOLOGICAL SCIENCES FACULTY OF SCIENCE UNIVERSITY OF MAL", , 1 January 2012 (2012-01-01), pages 1-103, XP055407562, Retrieved from the Internet: URL:http://studentsrepo.um.edu.my/6197/1/S ING_KONG_WAH_(SGR090114).pdf [retrieved on 2017-09-18]
- Kong-Wah Sing ET AL: "Evaluation of Blowfly (Chrysomya megacephala) Maggot Meal as an Effective, Sustainable Replacement for Fishmeal in the Diet of Farmed Juvenile Red Tilapia (Oreochromis sp.)", ONLINE) ARTICLE HISTORY, 14 March 2013 (2013-03-14), pages 253-8318, XP055407048, Retrieved from the Internet: URL:http://www.pvj.com.pk/pdf-files/34_3/2 88-292.pdf
- W. SANJAYA WEERAKKODY ET AL: "Effects of dried, powdered carrot (Daucus carota) incorporated diet on the skin and flesh colouration of Catla catla", SRI LANKA JOURNAL OF AQUATIC SCIENCES, vol. 21, no. 2, 1 January 2016 (2016-01-01), pages 95-103, XP055407807, ISSN: 1391-2038, DOI: 10.4038/sljas.v21i2.7505
- Emily Van Rijswijck: "Maggots: a sustainable animal feed | Brand South Africa", , 7 February 2012 (2012-02-07), pages 1-4, XP055407390, Retrieved from the Internet: URL:https://www.brandsouthafrica.com/inves tments-immigration/science-technology/magg ots-070212 [retrieved on 2017-09-18]
- A.J. CHARLTON ET AL: "Exploring the chemical safety of fly larvae as a source of protein for animal feed", JOURNAL OF INSECTS AS FOOD AND FEED, vol. 1, no. 1, 1 January 2015 (2015-01-01) , pages 7-16, XP055407065, DOI: 10.3920/JIFF2014.0020

## Description

### FIELD OF THE INVENTION

This invention falls within the scope of foods for aquaculture and aquarium fishes. It relates to a feed for omnivorous ornamental fishes, comprising blowfly fly larvae.

This invention discloses a low-cost and innovative feed, which is similar to the natural diet of omnivorous ornamental fishes, such as the ones used in ichthyotherapy. With this feed it is possible to overcome nutritional deficiencies, since it provides a healthy growing and development, through a balanced combination of nutritious, innovative and low-cost ingredients. The invention is described by the appended claims.

### BACKGROUND OF THE INVENTION

The market of ornamental fishes has been expanding for the last years, generating up to 30 billion dollars a year worldwide. This hobby is a matter of high interest from the population in general.

However, one major issue associated to fishkeeping in aquariums is the difficulty in supplying food which is suitable to animal welfare and which provides them with a healthy life. In case of farming, it is even more important that the animals are fed with foods allowing them to grow fast, without detriment to their physical condition. Finding a fish feed with those characteristics is not an easy task.

Currently, most of the feeds administrated are fishmeal-based, which implies high costs. This is one of the main obstacles in terms of aquaculture and fishkeeping in aquariums. The development of a fish feed with high quality and nutritionally balanced ingredients, which are simultaneously low-cost, is one of the major challenges in this context. Therefore, the formulation of a fish feed which embraces all these factors will provide a much higher final yield, while preserving the animal welfare.

On their turn, the existing alternatives to the use of fishmeal (using, for instance, soybeans and yeasts), pose a problem in terms of nutritional properties. As a consequence, significantly lower results are obtained as regards the fishes' intake and growth rate. So, there is a need for the development of food ingredients which may have an identical or an improved effect, comparatively to the conventional fishmeal products.

On the other hand, insect larvae and pupae have already been used as food for fishes, representing an alternative source of protein. Therefore, the closest prior art of this invention discloses feeds intended for aquaculture, which include fly larvae in their composition as a source of protein.

The patent document under the publication number JP 3564457 discloses the use of housefly larvae (species: *Musca domestica*), in combination with products from the degradation of vegetable waste, as food for farmed fishes. However, the said document does not make reference to the use of blowfly larvae (species: *Calliphora vomitoria*), nor does it mention a composition which is specifically adequate to satisfy the nutritional needs of omnivorous species.

The patent document published under the number US5618574 relates to a feed intended for aquaculture fishes, comprising soldier fly (species: *Hermetia illucens*) and house fly (species: *Musca domestica*) larvae and pupae, as a supplement to commercial pellets containing fishmeal. The aforementioned patent application does not relate to food compositions having fly larvae as their only source of animal protein, and which are suitable to specifically address the nutritional requirements of omnivorous fishes used in ictiotherapy.

The patent document under the publication number US2015173400, on its turn, discloses feeds using house fly larvae or pupae, which are aimed at fully or partially replacing the fishmeal. The Example 10, in particular, relates to a feed in which the fishmeal is fully replaced with the larvae, in an amount of 50% of the total dry weight, also including wheat, soya, vitamins and CMC in its composition. The effect of these feeds is demonstrated in terms of growth rate, weight gain, immunity activation, and ingestion rate by sparidae. The method for the preparation of the said feed includes high temperature heating, which may negatively affect the quality of the vitamins contained in the feed. This invention (Omnifeed), in addition to not using high temperatures in its manufacturing process, includes a vitamin supplement as one of its components, thus overcoming this kind of nutritional deficiency. The said patent application does not disclose food compositions which are suitable for the specific nutritional requirements of omnivorous fishes used in ichthyotherapy, nor does it mention the use of blowfly larvae, being prepared by means of freezing and lyophilisation.

### SOLVED TECHNICAL PROBLEMS

In this invention, the purpose was to create a feed for aquaculture and/or fishkeeping in aquariums, in particular, omnivorous fishes with nutritional deficiencies, as is the case of the fishes used in ichthyotherapy. The feed of this invention is aimed at solving the problems inherent to the commercial feeds according to the state of the art, which are commonly fishmeal-based feeds, in terms of the economic and environmental impact associated to the exploitation of fish stocks for the manufacture of fishmeal products. This invention offers a solution, which is replacing the fishmeal with blowfly larvae. This is a sustainable, inexpensive and nutritionally-rich alternative. From the composition of this invention results a high nutritional balance, with 50% proteins; 18% lipids; 18% carbohydrates; 9% minerals; 3% fibres and 2% vitamins.

Furthermore, the feed according to this invention as decribed by claim 1 allows, namely, providing a supplementation to the standard diet while answering to the nutritional needs of omnivorous fish used in ichthyotherapy. In their habitat, these fishes are characterized in that they feed themselves from vertebrate's skin dead cells (which is the reason why they are used in ichthyotherapy), as well as from algae, phytoplankton, zooplankton and debris. Their use in ichthyotherapeutic treatments thus leads to a nutritional deficiency, comparatively to the natural habitat. The feed of this invention allows the said deficiency to be overcome through the combination of natural, nutritious and low-cost ingredients, which are similar to the natural diet of those fishes.

Therefore, the feed which is the object of this invention has some advantages over other feeds, namely as regards the use of a mix of products from plant and animal origin such as claimed in claim 1.

According to Lozano *et al*. (2007), diets comprising both animal and plant origin products have a better performance than that of the feeds containing only animal-origin protein. In the last decade, the animal origin ingredients in feeds (such as fish oil or fishmeal) have been increasingly replaced with plant origin products (such as vegetable oils, soy flour or algae). Algae are products with a lower cost of production, which are easily obtained and have a nutritionally balanced composition (Lozano *et al*., 2007; Martinez-Llorens *et al.,* 2009; Tomás *et al.,* 2009). The use of algae would make aquaculture more sustainable, since the dependence on animal origin products would be reduced (Martinez-Llorens *et al*., 2009). On the other hand, aquaculture would also be more profitable. The feeds are one of the most expensive factors in this sector (accounting for 45% of the costs in aquaculture), and so it is very important to reduce these costs (Tomás *et al*., 2009). Therefore, replacing animal origin ingredients with plant origin ingredients in feeds will be a profitable alternative, notwithstanding the need to pay attention to the nutrients comprised in the diet (Tomás *et al*., 2009).

Microalgae may be used in aquaculture as a primary source of food for larvae, molluscs, shrimps, fishes, among others. Their high nutritional content explains the need to include microalgae in a diet, since the latter can be used as a supplementary source of proteins, carbohydrates, fatty acids (which are high in omega-3), pigments and vitamins (Ohse *et al*., 2009). Microalgae are rich in vitamins and trace elements, in addition to having a high content in proteins.

Microalgae also have an appropriate size, thus providing for an easy ingestion and good digestibility. Furthermore, microalgae show a high rate of growth and cell division, being easily cultivated and maintained. Therefore, microalgae are a simultaneously inexpensive, easy to produce and nutritious component. Microalgae are continuously grown, in a short period of time, requiring only small areas for their cultivation, which is highly advantageous. The fact that no herbicides or pesticides are required makes it more sustainable and also environment-friendly (Bertoldi *et al*., 2008). Microalgae use carbon dioxide (CO₂) in order to grow, multiply and produce organic compounds (including nutritional substances), thus helping to reduce the levels of CO₂ in the atmosphere, which are responsible for the so-called global warming effects (Richmond, 2003).

On the other hand, the method for the preparation of the feed, according to claim 4 which is based upon drying the components by means of lyophilisation, allows the nutritional and organoleptic properties of its components to be kept. On its turn, lyophilisation of all the components before processing allows for a product with high stability and quality to be obtained, which is adequate to the market of fishkeeping in aquariums.

It has already been proved that mixed diets, such as the one of this invention, have a better performance because they promote higher animal growth rates. The said diets also present a more balanced nutritional composition than that of the diets which are exclusively from animal origin. On its turn, the feed according to this invention has the advantage of being comprised of a high amount of animal protein, which is essential for the development and growth of cultivated fishes. And, contrarily to other feeds, the source of animal protein does not compete with products intended for human nutrition. Animal feeds are in general produced from fishmeal and other animal products, usually under conditions which are unsuitable for consumption, or also from viscera, blood, and slaughterhouse waste. The feed of this invention has an insect as the main source of protein - *Asticot* (blowfly larvae - *Calliphora vomitoria*), which is easily and recurrently cultivated, in addition to containing proteins, vitamins and amino acids of high nutritional quality. This combination of factors results in a reduction of the feed's production costs, without compromising its nutritional quality.

In what concerns the fly species already used in the state of the art as a food supplement, there are different species, namely the house fly (*Musca domestica*), the fruit fly (*Drosophila melanogaster*) and the soldier fly (*Hermetia illucens*). The fly used in Omnifeed is the blowfly, whose scientific name is *Calliphora vomitoria,* and apparently its use has not yet been reported in the scope of fish feeds, thus representing an innovative application.

The use of blowfly in the feed of this invention has several advantages in terms of production, comparatively to the other fly species, such as the following: i) egg hatching is faster in a blowfly (occurring in a period from 0 to 18 hrs after egg deposition) than in the case of the remaining species aforementioned (from 8 to 72 hours [3 days); ii) blowfly larvae develop faster than those of the other flies, which take from 7 to 12 days to reach the adult stage, whereas, for instance, in the case of the fruit fly, it will take 7 to 30 days. As regards reproduction, as long as the temperature is the ideal one, it is possible to easily reproduce the blowfly in laboratory, since this animal has a short life cycle.

In addition to the advantages brought to the economy and also to animal welfare and growth, the feed according to this invention can also promote an improved environmental sustainability. Insects are a potential alternative resource, namely as a source of protein, comparatively to the animals from the conventional livestock production. Firstly, because insects have a high feed conversion ratio - which means that, in order to produce the same amount of proteins as other animals, insects require a lower amount of food. Secondly, because they emit less greenhouse gases and originate less nitrogenous products than livestock production, thus avoiding contamination and reduction of air and water quality.

None of the documents of the state of the art discloses this set of advantages and properties, in the sense of optimizing the farming of omnivorous fishes, in particular of fishes used in ichthyotherapy. A feed offering a nutritionally balanced composition, which enables the fishes to grow healthily in a shorter period of time, with cheaper and more sustainable nutrition.

### SUMMARY OF THE INVENTION

It is therefore the object of this invention, a feed that is suitable for omnivorous fishes with nutritional deficiencies, the said feed being comprised of animal- and plant-origin ingredients, in which the animal protein comes exclusively from blowfly larvae.

The feed according to this invention comprises, in percentage by dry weight, 76,8% blowfly larvae (*Asticot*), 17,7% microalgae, 4,4% carrot and 1,1% vitamin supplement. From this composition results a high nutritional balance, with 50% protein; 18% lipids; 18% carbohydrates; 9% minerals; 3% fibres and 2% vitamins.

Furthermore, it is also the object of this invention a method for the preparation of the said feed, which includes the steps of i) initial preparation of the components by freezing followed by drying through lyophilisation; ii) weighting and mixing the feed components; iii) grinding the components until obtaining a powder and homogenization of the said powder; iv) adding distilled water; v) moulding the paste into pellets; vi) drying the pellets; vii) cutting the pellets; viii) storage.

### DESCRIPTION OF THE DRAWINGS

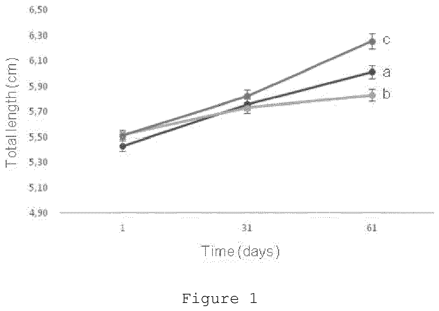

Figure 1 - Average total length of *Garra rufa* fishes (Heckel, 1843) during a test in which the fishes were subject to three different diets: a feed for freshwater ornamental fishes (a), a feed for Discus fishes (b) and the feed of this invention (c). The results were expressed in mean ± standard error (SEM).

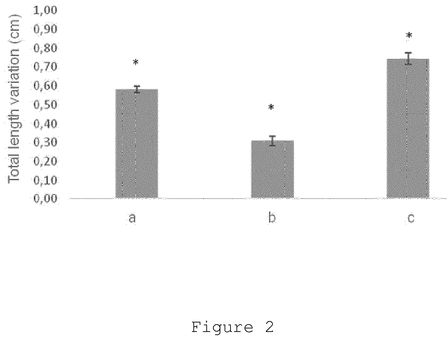

Figure 2 - Average variation of total length of *Garra rufa* (Heckel, 1843) subject to three different treatments: feed for freshwater ornamental fishes (a), feed for Discus fishes (b) and the feed of the invention (c). The results were expressed in mean ± standard error (SEM). The asterisk (*) indicates differences which are statistically relevant (one-way ANOVA; p <0.05).

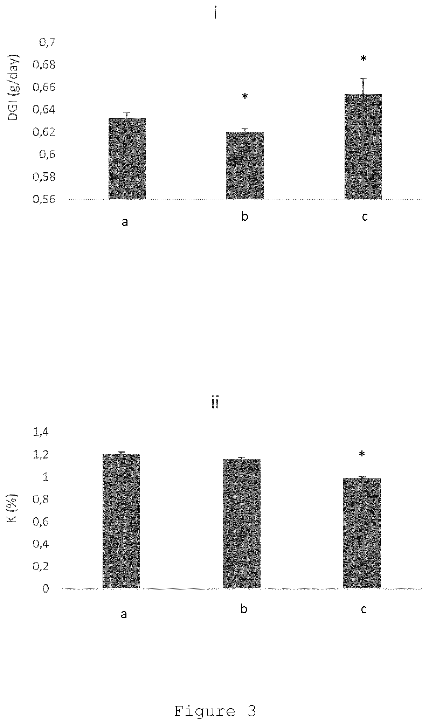

Figure 3 - Average variation of the indexes DGI (i) and K (ii) of *Garra rufa* (Heckel, 1843) subject to three different treatments: feed for freshwater ornamental fishes (a), feed for Discus fishes (b) and the feed of this invention (c). The results were expressed in mean ± standard error (SEM). The asterisk (*) indicates differences which are statistically relevant (one-way ANOVA; p <0.05).

### DETAILED DESCRIPTION OF THE INVENTION

As previously mentioned, it is the object of this invention a feed intended for omnivorous fishes with nutritional deficiencies, comprising animal and plant-origin ingredients, in which the animal protein comes exclusively from blowfly larvae.

In a preferred embodiment of this invention, the feed of the invention comprises in percentage by dry weight:
- 76.8% blowfly larvae
- 17.7% microalgae
- 4.4% carrot
- 1.1% vitamin supplement.

From this aforementioned composition results a high nutritional balance, with 50% protein; 18% lipids; 18% carbohydrates; 9% minerals; 3% fibres and 2% vitamins. The feed according to this invention allows, in particular, the diet of omnivorous fishes with nutritional deficiencies to be supplemented, namely the fishes used in ichthyotherapy, as is the case of those of the species *Garra rufa* (Heckel, 1843). The feed of this invention replaces the source of animal protein with a cheaper and environmentally more sustainable source, which provides for a high feed conversion ratio and lower costs of production, comparatively to fishmeal or equivalent products from animal origin. Moreover, because it is a mixed diet, with ingredients from animal and plant origin, it also has a nutritional composition which is more balanced than that of diets comprising ingredients from animal origin only.

In a preferred embodiment of this invention, the feed is characterized in that it comprises 50% protein; 18% lipids; 18% carbohydrates; 9% minerals; 3% fibres and 2% vitamins.

In an even more preferred embodiment of the invention, the feed is suitable for fishes used in ichthyotherapy, more preferably for Garra rufa fishes (Heckel, 1843).

A method for the preparation of the feed intended for omnivorous fishes is also an object of this invention, which includes the following steps:
i) initial preparation of the components by freezing followed by drying through lyophilisation;
ii) weighting and mixing of the feed components: blowfly larvae, microalgae, carrot, and vitamin supplement;
iii) grinding the components until obtaining a powder and homogenising the said powder;
iv) adding an amount of distilled water which allows a consistent and homogenous paste to be obtained;
v) moulding the paste into pellets;
vi) drying the pellets;
vii) cutting the pellets;
viii) storage.

In a preferred embodiment of the invention, the method for obtaining the feed involves freezing at a temperature of - 20°C, and lyophilisation at a temperature of -50°C for 2 days. The method for obtaining the feed involves adding, for each 100 g of feed, 76,75 g blowfly larvae, 17,72 g microalgae, 4,43 g carrot, 1,10 g vitamin supplement and 120 mL distilled water.

### EXAMPLES

### Example 1 - Preparation of the feed

Firstly, all the ingredients of the feed are prepared. In this step, the ingredients are washed with water and carefully selected in order to ensure that only the high quality ingredients will be used. The ingredients are placed into a freezer cabinet at a temperature of -20°C, and then lyophilised for 2 days at a temperature of -50°C. The lyophilisation process dries the ingredients, causing the water contained in the frozen matter to pass directly into the vapour phase, without going through the liquid state.

Secondly, the required amount of each ingredient for the feed is weighted, respecting the relative proportions of each one in order to keep the nutritional composition correct. So, for 100 g of feed, 76,75 g of blowfly larvae, 17,72 g of microalgae, 4,43 g of carrot and 1,10 g of vitamin supplement are needed. After weighting the exact amount of each ingredient, in an analytical balance, all of them are crushed and homogenized into powder in a mincer. 120 mL of distilled water are then added, mixing it all carefully, in order to obtain a more consistent and homogeneous paste. Then, with the aid of 1 mm diameter syringes, the feed paste obtained is moulded with 1 mm diameter and put in a tray for subsequent oven drying at a temperature of 60°C for 24 hrs. After drying the feed, the latter is processed in a calibrated cutting system, with a millimetric threaded rod of 1 mm, in order to ensure that the size of the granules obtained is 1 mm. After this step, the feed is finished and will be duly stored in airtight containers, in a dry and dark place under controlled temperature (20°C).

As will be evident to a person skilled in the art, this invention shall not be limited to the embodiments disclosed in this document, since several modifications can be made provided that they are kept within the scope of this invention.

Therefore, the process may have alternative embodiments which are aimed, for instance, at adapting it to an industrial scale and to different species of omnivorous ornamental fishes, namely in what concerns: 1) using an alternative freezing method; 2) including the use of an extruder, which will perform the moulding and cutting of the feed; 3) increasing the volume of the sample being produced at each time; 4) producing different sizes of the feed's granules, adjusting them to the species and size of the subjects they are intended for. Changes in these four parameters allow the process to be optimized and represent an added value in the development of this product, causing the manufacturing process to be more efficient.

The above listed preferred methods are obviously susceptible of being combined, in a number of possible ways, the repetition of all those combinations being herein avoided.

Example 2 - The feed's effect on the growing of *Garra rufa* (Heckel, 1843).

The feed of the invention was tested in a fish growing assay with *Garra rufa* fishes (Heckel, 1843), which was carried out for 61 days. In this assay, the effects of two commercial diets - one feed for freshwater ornamental fishes (a) and one feed for Discus fishes (b) - were compared to those of the feed according to this invention (c). Although growing has occurred with all the diets, the fishes receiving the feed of the invention have shown a significantly higher increase of their total length, which was statistically proven (Figure 1; one-way ANOVA, p = 0,000).

As regards the variation of the total length, it is again remarkable the higher growing obtained in fishes fed with the diet of this invention (c), when compared to the feed for freshwater ornamental fishes (a) and to the feed for Discus fishes (b) (0,74 cm with the feed of this invention *versus* 0,58 cm with the feed for freshwater ornamental fishes and 0,31 cm with the feed for Discus fishes; figure 2) - Statistically significant differences were found between all the treatments (post-hoc Tukey HSD test: p = 0,000).

### Example 3 - The feed's effect on zootechnical parameters

The DGI parameter - Daily Growth Index - shows that the diet with the highest daily growth of the fishes was that of the invention (c). The lowest growth was that provided by the feed for Discus fishes (b) (figure 3-i). Statistically significant differences were observed only between the diets of the feed for Discus fishes and the one of this invention (one-way ANOVA, p = 0,024; post-hoc Tukey HSD test: p = 0,019).

The condition index (K) is used to determine if the subjects are growing both in weight and in length, or if they are only gaining weight. This index presented lower results with the feed of the invention (c) and similar results with the feed for freshwater ornamental fishes (a) and the feed for Discus fishes (b). The feed according to this invention was the only one to present statistically significant differences when compared to the remaining diets (figure 3-ii, one-way ANOVA, p = 0,000; post-hoc Tukey HSD test: p = 0,000). However, it has been found that the fishes receiving the feed of the invention were the ones showing the condition index which was the closest to 1, i.e. there was a balanced growth in terms of weight and length. On the contrary, the fishes fed with the other two feeds had an increase in their weight but kept approximately the same length, which means that they have only gained weight.

### Bibliography

Lozano, N. B. S., Vidal, A. T., Martinez-Llorens, S., Mérida, S. N., Blanco, J. E., López, A. M., Torres, M. P., Cerdá, M. J. 2007. Growth and economic profit of gilthead sea bream (Sparus aurata, L.) fed sunflower meal. Aquaculture 272, 528 - 534.
Martinez-Llorens, S., Vidal, A. T., Garcia, I. J., Torres, M. P., Cerdá, M. J. 2009. Optimum dietary soybean meal level for maximizing growth and nutrient utilization of on-growing gilthead sea bream (Sparus aurata). Aquaculture Nutrition 15, 320-328.
Ohse, S., Dener, R. B., Ozório, R. A., Braga, M. V. da C., Cunha, A, P., Lamarca, C. P., Santos, M. E. 2009. Produção de biomassa e teores de carbono, hidrogênio, nitrogênio e proteina em microalgas. Ciência Rural 39, 1760-1767.
Tomás, A., Martinez-Llorens, S., Jover, M. 2009. The effect of dietary soybean meal on growth, nutrient utilization efficiency, and digestibility of juvenile common dentex, Dentex dentex (actinopterygii: perciformes: sparidae). Acta ichthyologica et piscatoria 39, 19 - 25.

## Claims

1. A feed for omnivorous fish of *Garra rufa* species comprising ingredients from animal and plant origin, the animal protein being exclusively from blowfly larvae, such ingredients being in percentage by dry weight:
• 76,8% blowfly larvae;
• 17,7 % microalgae;
• 4,4% carrot; and
• 1,1% vitamin supplement.

2. A feed according to any of the previous claims wherein it contains 50% protein; 18% lipids; 18% carbohydrates; 9% minerals; 3% fibres and 2% vitamins.

3. Use of the feed of any of the previous claims as feed for fishes used in ichthyotherapy.

4. A method for the preparation of the feed of any of the claims 1 to 3 comprising the following steps:
i) preparation of the components by freezing followed by drying through lyophilisation;
ii) weighting and mixing the feed components in a relation for each 100 g of feed: 76,75 g of blowfly larvae, 17,72 g of microalgae, 4,43 of carrot, 1,10 g of vitamin supplement and 120 mL of distilled water;
iii) grinding the components until obtaining a powder and homogenization of the said powder;
iv) adding an amount of distilled water which allows a consistent and homogenous paste to be obtained;
v) moulding the paste into pellets;
vi) drying the pellets;
vii) cutting the pellets;
viii) storage.

5. A method according to claim 4, wherein the freezing occurs at a temperature of -20°C, and lyophilisation at a temperature of -50°C, for 2 days.

## Patentansprüche

1. Ein Futter für allesfressende Fische der ***Garra rufa*** Art, das Zutaten von tierischer und pflanzlicher Herkunft umfasst, das Tierprotein ist ausschließlich von Schmeißfliegenlarven, solche Zutaten sind, wie folgt, in Trockengewichtsprozentsatz vorhanden:
• 76,8% Schmeißfliegenlarven;
• 17,7% Mikroalgen;
• 4,4% Mohrrübe; und
• 1,1% Vitaminzusatz.

2. Ein Futter nach jedem der vorherigen Ansprüche, worin es 50% Protein, 18% Lipide; 18% Kohlenhydrate; 9% Mineralien; 3% Ballaststoffe und 2% Vitamine beinhaltet.

3. Nutzung des Futters von jedem der vorherigen Ansprüche als Futter für Fische, die bei Ichthyotherapie verwendet werden.

4. Ein Verfahren für die Vorbereitung des Futters von jedem der Ansprüche 1 bis 3, das folgende Schritte umfasst:
i) Vorbereitung der Zutaten durch Einfrieren, gefolgt von Trocknung durch Lyophilisierung;
ii) Gewichtung und Vermischung der Zutaten des Futters in einem Verhältnis für jede 100g Futter: 76,75g Schmeißfliegenlarven, 17,72 g Mikroalgen; 4,43 g Mohrrübe, 1,10g Vitaminzusatz und 120 mL destilliertes Wasser;
iii) Vermahlung der Zutaten bis ein Pulver erhalten wird und Homogenisierung des besagten Pulvers;
iv) Ergänzung einer Menge an destilliertem Wasser, welches es ermöglicht, dass eine konsistente und homogene Paste erhalten wird;
v) Ausformung der Paste in Pellets;
vi) Trocknung der Pellets;
vii) Schneiden der Pellets;
viii) Lagerung.

5. Ein Verfahren nach Anspruch 4, worin das Einfrieren bei einer Temperatur von -20°C erfolgt, und Lyophilisierung bei einer Temperatur von -50°C, während zwei Tage, erfolgt.

## Revendications

1. Un aliment pour poissons omnivores de l'espèce ***Garra* rufa** comprenant des ingrédients d'origine animale et végétale, la protéine animale provenant exclusivement des larves de mouches à viande, ces ingrédients étant, exprimés en pourcentage du poids sec:
• 76,8 % de larves de mouches à viande;
• 17,7 % de microalgues;
• 4,4 % de carotte; et
• 1,1% de supplément vitaminique.

2. Un aliment selon l'une des revendications précédentes dans lequel il contient 50% de protéines, 18% de lipides, 18% de glucides, 9% de minéraux, 3% de fibres alimentaires et 2% de vitamines.

3. Utilisation de l'aliment selon l'une des revendications précédentes comme aliment pour poissons utilisé en ichtyothérapie.

4. Un procédé de préparation de l'aliment selon l'une des revendications 1 à 3 comprenant les étapes suivantes:
i) préparation des composants par congélation suivie d'un séchage par lyophilisation;
ii) pesage et mélange des ingrédients de l'aliment dans une relation, pour chaque 100 g d'aliment : 76,75g de larves de mouches à viande, 17, 72 g de microalgues, 4, 43 g de carottes, 1, 10 g de supplément vitaminique et 120 mL d'eau distillée;
iii) broyage des composants jusqu'à obtention d'une poudre et homogénéisation de ladite poudre;
iv)additioneuse d'une quantité d'eau distillée qui permet d'obtenir une pâte homogène et consistante;
v) moulage de la pâte en boulettes;
vi) sécheage des boulettes;
vii) coupage des boulettes;
viii) stockage.

5. Un procédé selon la revendication 4, dans lequel la congélation a lieu à une température de -20°C, et la lyophilisation à une température de -50°C, pendant 2 jours.
